# FASCICULE DE BREVET EUROPEEN

(11) **EP 2 297 928 B1**
(45) Date de publication et mention de la délivrance du brevet: **09.05.2012**
(21) Numéro de dépôt: 09794026.6
(22) Date de dépôt: 26.06.2009
(51) Int. Cl.: H04L 29/12

(54) **PROCEDE DE RECEPTION D'UN PAQUET DE DONNEES DANS UN DOMAINE IPV6, DISPOSITIF ET PASSERELLE RESIDENTIELLE ASSOCIES**
VERFAHREN FÜR DEN EMPFANG EINES DATENPAKETS IN EINER IPV6-DOMÄNE SOWIE ZUGEHÖRIGE VORRICHTUNG UND RESIDENTIAL GATEWAY
METHOD FOR RECEIVING A DATA PACKET IN AN IPV6 DOMAIN, AND ASSOCIATED DEVICE AND RESIDENTIAL GATEWAY

(30) Priorité: 30.06.2008 FR 0854405
(43) Date de publication de la demande: 23.03.2011
(73) Titulaire: FRANCE TELECOM, 75015 Paris (FR)
(72) Inventeur: BOUCADAIR, Mohamed, F-35000 Rennes (FR); GRIMAULT, Jean-Luc, F-14120 Mondeville (FR)
(86) Numéro de dépôt international: PCT/FR2009/051228
(87) Numéro de publication internationale: WO 2010/004180

(56) Documents cités:
- EP-A- 1 420 559
- WO-A-2004/039014
- WO-A-2007/099248
- WO-A-2008/001007
- MYUNG-KI SHIN ET AL: "Ports option support in dual stack transition mechanism (DSTM)" ADVANCED COMMUNICATION TECHNOLOGY, 2004. THE 6TH INTERNATIONAL CONFERE NCE ON PHOENIX PARK, KOREA FEB. 9-11, 2004, PISCATAWAY, NJ, USA,IEEE, vol. 1, 9 février 2004 (2004-02-09), pages 225-228, XP010701165 ISBN: 978-89-5519-119-6
- DANIEL PARK ET AL: "Network Address Translation - Protocol Translation (NAT-PT); draft-daniel-natpt-bis-01.txt" INTERNET ENGINEERING TASK FORCE, IETF, 22 octobre 2005 (2005-10-22), XP015042124
- SRISURESH P ET AL: "RFC 2663 - IP Network Address Translator (NAT) Terminology and Considerations" INTERNET CITATION, [Online] XP002204216 Extrait de l'Internet: URL:http://www.ietf.org/rfc/rfc2663.txt> [extrait le 2002-07-01]
- AFIFI H ET AL: "Methods for IPv4-IPv6 transition" COMPUTERS AND COMMUNICATIONS, 1999. PROCEEDINGS. IEEE INTERNATIONAL SY MPOSIUM ON RED SEA, EGYPT 6-8 JULY 1999, LOS ALAMITOS, CA, USA,IEEE COMPUT. SOC, US, 6 juillet 1999 (1999-07-06), pages 478-484, XP010555073 ISBN: 978-0-7695-0250-2
- KAWARASAKI Y ET AL: "IPv4/IPv6 SIP interworking methods in dual-stack network" COMMUNICATIONS, 2003. APCC 2003. THE 9TH ASIA-PACIFIC CONFERENCE ON 21-24 SEPT. 2003, PISCATAWAY, NJ, USA,IEEE, vol. 3, 21 septembre 2003 (2003-09-21), pages 1124-1128, XP010687978 ISBN: 978-0-7803-8114-8

## Description

### Domaine de l'invention

Le domaine de l'invention est celui d'un réseau de télécommunications, en particulier un réseau de télécommunications IP dans lequel sont transportés des paquets de données d'un équipement source identifié par une adresse source vers un équipement de destination identifié par une adresse de destination.

Un tel réseau de télécommunications regroupe une pluralité d'équipements, de liens et de fonctions dédiés au transport des données issues d'équipements terminaux connectés à ce réseau. En particulier, les fonctions de transport peuvent être implémentées grâce à l'activation de protocoles de routage et de transmission. Un réseau de télécommunications administré par un opérateur est encore appelé un domaine.

Un fournisseur de service de connectivité IP déploie une architecture dédiée pour permettre aux utilisateurs d'équipements terminaux d'être joignables. L'accès au service de connectivité IP est géré par le fournisseur de service qui s'appuie sur le réseau de télécommunications d'un opérateur pour router les paquets de données émis par les équipements terminaux vers leurs destinations finales. Dans certains cas, ledit fournisseur de service est aussi l'opérateur de réseau de télécommunications.

Un tel fournisseur de service affecte une adresse IP, généralement cette adresse est publique à une passerelle résidentielle entre un réseau résidentiel et le réseau public ou domaine IP de l'opérateur. La passerelle résidentielle affecte généralement aux terminaux de son réseau résidentiel des adresses IP privées.

Dans la suite, on désignera par « passerelle résidentielle » tout équipement d'interconnexion entre un réseau privé et un réseau opéré par un fournisseur de service, le réseau privé pouvant aussi bien être un réseau résidentiel qu'un réseau d'entreprise.

Dans la suite, le réseau opéré par les fournisseurs de service sera aussi désigné par le terme "réseau public".

Placée en coupure des paquets de données entre un terminal de son réseau résidentiel privé et le domaine IP de l'opérateur, la passerelle résidentielle comporte, de façon connue, une table dans laquelle elle associe l'adresse IP privée et le port associé à ce terminal, avec une adresse IP publique de type IPv4 et un port de cette même passerelle sur le réseau public.

Cette table est connue de l'homme du métier sous l'appellation "table de nattage", cette expression venant de l'acronyme NAT (*Network Address Translator* en anglais). Plusieurs types de NAT peuvent être implémentés tels que le « Full Cone », « Port Restricted » ou encore « symétrique ».

Il est communément admis par la communauté des fournisseurs de service IP que l'épuisement des adresses IPv4 publiques est une fatalité. Pour éviter ce problème, la communauté s'est mobilisée dans le passé, ce qui a conduit à la définition d'un nouveau protocole: IPv6 (*Internet Protocol version 6*). Cette nouvelle version du protocole IP offre un grand nombre d'adresses IP et un mécanisme de routage hiérarchique aux performances améliorées. Ces mêmes fournisseurs ne sont toutefois pas indifférents aux alarmes récemment émises par l'IETF (*Internet Engineering Task Force*), notamment dans des rapports présentés au sein du groupe de travail GROW (*Global Routing Operations Working Group)* concernant un risque d'épuisement des adresses IPv4 de l'IANA (Internet Assigned Numbers Authority) fin 2010.

Néanmoins, cette solution, i.e. IPv6, n'est en pratique pas encore beaucoup activée par les opérateurs, pour des raisons financières, stratégiques et techniques liées à la gestion de la complexité des opération de transition et de migration.

Pour limiter le nombre d'adresses publiques IPv4 nécessaires pour la fourniture d'un service de connectivité IP à un parc de clients, une solution de double NAT, appelée aussi « NAT Opérateur », a été proposée et implémentée. Elle consiste à activer une fonction NAT au sein du réseau de télécommunications de l'opérateur, de telle sorte que les passerelles résidentielles utilisent une adresse privée dans leurs tables de Nattage vers l'extérieur (au lieu d'une adresse public). Ainsi, c'est la fonction « NAT Opérateur » qui assure la traduction des adresses privées des passerelles résidentielles vers des adresses publiques, ce qui permet à un fournisseur de service d'économiser un nombre non négligeable d'adresses publiques IPv4 requises pour la fourniture du service de connectivité IP.

### Inconvénients de la technique antérieure

La solution « NAT Opérateur » présente des inconvénients, parmi lesquels :
- une complexification du traitement des paquets de données IP : du fait de l'introduction d'un deuxième niveau de traduction d'adresses, les paquets de données doivent être modifiés deux fois ;
- la nécessité d'adapter la mise en oeuvre des protocoles de signalisation applicative ou ALG (*Application Level Gateway*) conventionnels tels que DNS (*Domain Name System*), FTP (*File Transfer Protocol*) ou encore SIP (*Session Initiation Protocol*). Dans le cas de SIP par exemple, l'établissement et le maintien d'une session de voix sur IP, nécessite que, pour maintenir à jour la table de Nattage d'une passerelle résidentielle, des échanges de signalisation fréquents entre le terminal de l'abonné et le réseau public via des requêtes de réenregistrements doivent être implémentés de façon à maintenir les sessions de NAT actives. En présence d'un double NAT, un tel mécanisme doit aussi être prévu au niveau de l'équipement qui héberge la fonction « NAT Opérateur ». L'adresse et le port publics effectivement en cours d'utilisation pour le terminal doivent en outre être communiqués à l'application SIP ;
- une dégradation du service de connectivité IP offert par l'opérateur du réseau public de télécommunications doit être déplorée, notamment parce que des fonctionnalités telles que le "*port forwarding*" ou le *DynDNS* ne peuvent pas être supportées en présence du « NAT Opérateur ».

Par ailleurs, une telle solution ne pourra pas empêcher, mais seulement retarder le phénomène d'épuisement des adresses IPv4. Il faudra donc prévoir à moyen terme un passage à IPv6. Un tel passage va nécessairement engendrer une période de transition pendant laquelle des domaines IPv6 devront s'interconnecter avec des domaines IPv4. Or, rien n'est prévu dans les réseaux actuels pour faciliter une telle interconnexion d'une manière efficace, optimale et sans instanciation d'états supplémentaires dans les noeuds réseaux mis en oeuvre dans la fourniture du service de connectivité IP.

Il n'est pas prévu non plus de migration progressive d'un adressage IPv4 vers un adressage IPv6 à partir de mécanismes d'interconnexion simples entre un domaine IPv6 et un domaine IPv4, notamment qui ne nécessitent pas que les terminaux clients implémentent à la fois le protocole IPv4 et le protocole IPv6. Le document D1=MYUNG-KI SHIN ET AL: "Ports option support in dual stack transition mechanism (DSTM)", THE 6TH INTERNATIONAL CONFERENCE ON ADVANCED COMMUNICATION TECHNOLOGY, 9-11 FEBRUARY 2004, PHOENIX PARK, KOREA, pages 225-228, décrit un procédé de réception d'un paquet de données IPv6 dans un domaine IPv6 interconnecté avec un domaine IPv4.

### Exposé de l'invention

L'invention vient améliorer la situation à l'aide d'un procédé de réception d'un paquet de données IPv6 dans un domaine IPv6 interconnecté avec un domaine IPv4, ledit paquet comprenant une adresse IPv6 de destination et une adresse IPv6 source.

Selon l'invention, ledit procédé est mis en oeuvre dans une passerelle résidentielle apte à connecter un terminal d'utilisateur audit domaine IPv6 et il comprend les étapes suivantes :
- identification d'une adresse IPv6 de destination construite par concaténation d'un préfixe opérateur, d'une adresse de destination IPv4 et d'un numéro de port de destination;
- si nécessaire, mise en conformité d'au moins une adresse du paquet de données par remplacement de ladite adresse, ledit remplacement appartenant à un groupe comprenant un remplacement d'une adresse construite par une adresse native dudit terminal d'utilisateur et un remplacement d'une adresse native dudit terminal d'utilisateur par une adresse construite, et modification du paquet de données à l'aide de l'adresse mise en conformité; et
- routage du paquet de données modifié vers sa destination.

Dans un contexte de migration du protocole IPv4 vers le protocole IPv6, on considère un premier équipement terminal d'un domaine IPv4 qui ne peut émettre et recevoir un paquet de données que selon le protocole IPv4. Parallèlement, un deuxième équipement terminal du domaine IPv6 ne peut qu'émettre et recevoir un paquet de données IPv6. Selon l'invention, lorsqu'un de ces équipements souhaite envoyer un paquet de données à l'autre, il utilise son protocole, mais les données acheminées dans le domaine IPv6 le sont selon le protocole IPv6.

Le paquet de données est donc émis soit en IPv4 ou IPv6, transformé si nécessaire en un paquet de données selon le protocole IPv6 pour son acheminement dans le domaine IPv6, puis re-transformé, si nécessaire en un paquet de données IPv4.

Une telle transformation s'appuie sur un mécanisme de construction d'adresse de destination IPv6 à partir d'une adresse de destination IPv4 du premier terminal par concaténation d'un préfixe opérateur, de cette adresse de destination IPv4 et du numéro de port de destination du paquet. En effet, on considère le cas où un équipement d'interconnexion du domaine IPv6 avec le domaine IPv4 construit une adresse de destination IPv6 à partir de l'adresse de destination IPv4 et du port de destination. Cette adresse de destination IPv6 construite est routable dans le domaine IPv6 et comprend les informations utiles véhiculées par le paquet de données IPv4.

Cette transformation nécessite que le deuxième terminal d'utilisateur, bien qu'il implémente le protocole IPv6, dispose d'une adresse « fictive » IPv4, qui peut être la sienne ou celle d'une passerelle résidentielle qui administre un réseau résidentiel auquel il est connecté. Cette adresse, utilisée comme adresse destination d'un paquet IPv4 en provenance du domaine IPv4, est exploitée par l'équipement d'interconnexion pour construire l'adresse de destination IPv6 précédemment évoquée.

Inversement, il est possible de retrouver l'adresse IPv4 et le numéro de port à l'origine d'une adresse IPv6 construite selon un tel mécanisme (c'est-à-dire respectant le formalisme de construction d'adresse IPv6 qui vient d'être mentionné). Il n'est donc pas nécessaire de stocker une table de traduction d'adresses IPv4 vers IPv6 ni de maintenir des états relatifs à des sessions au niveau du noeud d'accès (encore appelé noeud d'interconnexion) des deux domaines IPv4 et IPv6. L'invention permet donc, dans le sens IPv4 vers IPv6 (ainsi que d'IPv6 vers IPv4), de router le paquet de données IPv4 sous la forme d'un paquet de données IPv6 vers sa destination et de livrer les informations utiles contenues dans le paquet à son destinataire, sans avoir recours à des tables d'états lourdes à maintenir.

Ainsi, ni le terminal d'utilisateur IPv6 destinataire ou émetteur du paquet de données, ni éventuellement la passerelle résidentielle qui le gère, ni encore les routeurs en charge d'acheminer le paquet à sa destination n'ont besoin d'interpréter le protocole IPv4.

Toutefois, pour que l'acheminement du paquet de données IPv6 issu d'une telle transformation puisse se faire comme celui d'un paquet IPv6 natif, il est nécessaire de vérifier une conformité de ses adresses sources et destination par rapport au formalisme précédemment évoqué. Le procédé selon l'invention propose donc une solution pour identifier que la destination ou la provenance de ce paquet appartient à un domaine IPv4 et pour lui appliquer en conséquence un traitement de vérification approprié.

Selon un aspect de l'invention, lorsque le paquet est en provenance dudit terminal d'utilisateur et à destination du domaine IPv4, l'étape de mise en conformité de l'adresse source comprend en outre les étapes suivantes :
- identification d'une adresse IPv6 source native;
- création d'une entrée dans une table de traduction d'adresses, ladite entrée associant ladite adresse source native à une adresse source construite par concaténation d'un préfixe opérateur, d'une adresse IPv4 affectée à la passerelle et d'un numéro de port source appartenant à une plage de numéros de ports autorisés pour ladite passerelle; et
- remplacement de l'adresse source native du paquet de données par l'adresse source construite.

Il s'agit dans ce cas d'une communication sortante. Lorsqu'une adresse de destination construite a pu être identifiée, on peut en déduire que le paquet de données est destiné à un terminal d'utilisateur du domaine IPv4. Dans ce cas, son adresse source doit être une adresse construite afin qu'un équipement d'interconnexion du domaine IPv6 avec le domaine IPv4 puisse ensuite récupérer l'adresse IPv4 source et transformer à l'inverse le paquet de données IPv6 en un paquet de données IPv4. Si aucun traitement n'est effectué, le paquet ne pourra pas être traité par le noeud d'interconnexion; car l'adresse source native ne contient pas d'information relative à l'adresse IPv4 source, c'est-à-dire l'adresse IPv4 fictive du terminal ayant émis ledit paquet.

Si l'adresse source est native, le procédé selon l'invention permet de la remplacer par une adresse source construite appartenant à un préfixe ou plage d'adresses source IPv6 autorisées pour la passerelle.

En prévision de la réception d'une réponse à ce paquet de données, une association entre l'adresse source native d'origine et l'adresse source construite est ajoutée dans une table de traduction d'adresses de la passerelle résidentielle.

Ainsi, un paquet de données émis en réponse pourra être acheminé jusqu'au terminal d'utilisateur du réseau résidentiel qui avait émis le premier paquet de données.

Un avantage de l'invention est qu'elle permet à un terminal d'utilisateur IPv6 d'utiliser l'adresse source qu'il souhaite pour émettre des paquets de données à destination d'un domaine IPv4, puisque la passerelle selon l'invention fait le nécessaire pour qu'ils soient acheminés jusqu'à leur destination.

Selon un aspect de l'invention, l'identification d'adresse est réalisée à l'aide d'un identifiant compris dans l'adresse de destination.

Cet identifiant peut être valorisé différemment selon qu'il s'agit d'une adresse IPv6 native ou d'une adresse IPv6 construite à partir d'une adresse IPv4. Un avantage est de permettre une identification simple et rapide de la nature de l'adresse du paquet de données. Une telle solution permet aussi une mutualisation des équipements d'interconnexion IPv4 IPv6 entre plusieurs opérateurs.

Selon un autre aspect de l'invention, le procédé de réception comprend en outre une étape de vérification d'une concordance entre le numéro de port source du paquet de données et le numéro de port de source de l'adresse source construite.

En effet, le paquet de données comprend un numéro de port source au niveau de la couche transport selon le modèle OSI. Pour qu'une réponse puisse être acheminée par le réseau jusqu'au terminal émetteur du premier paquet, il est important que ce numéro de port source de niveau transport concorde avec le numéro de port source contenu dans l'adresse source construite du paquet de données. Si ce n'est pas le cas, le procédé selon l'invention permet de faire concorder les deux numéros de ports source.

On notera que l'étape de vérification et l'étape de mise en conformité de l'adresse source peuvent être mises en oeuvre simultanément. Par exemple, le choix d'une adresse source construite dans le préfixe de la passerelle peut intégrer la contrainte d'avoir un numéro de port source égal au numéro de port source de niveau transport.

Selon un aspect de l'invention, lorsque le paquet de données est en provenance du domaine IPv4 et à destination du terminal d'utilisateur connecté au domaine IPv6 par ladite passerelle résidentielle, l'étape de mise en conformité de l'adresse source comprend les étapes suivantes :
- recherche dans une table de traduction d'adresses de ladite passerelle d'une entrée associant à ladite adresse de destination une adresse de destination native.
- si une entrée a été trouvée, remplacement de l'adresse de destination construite du paquet de données par l'adresse de destination native de l'entrée.
On notera que le numéro de port destination est aussi remplacé par celui renseigné dans la table de traduction d'adresses et de ports telle que maintenue par la passerelle résidentielle.

Il s'agit ici d'une communication entrante. Le paquet de données IPv6 a été construit à partir d'un paquet IPv4 par un équipement d'interconnexion du domaine IPv6 au domaine IPv4. Il se peut qu'il constitue une réponse à un paquet de données précédemment émis par le terminal d'utilisateur connecté à la passerelle résidentielle. Celle-ci consulte donc sa table de traduction. Si elle y trouve une association entre l'adresse de destination extraite du paquet de données reçu et une adresse de destination IPv6 native, elle remplace l'adresse de destination et potentiellement le numéro de port destination construite du paquet de données par l'adresse IPv6 native de l'entrée et route le paquet modifié vers le terminal destinataire.

Selon un autre aspect de l'invention, le procédé de réception comprend en outre une étape de vérification d'une concordance entre le numéro de port de destination du paquet de données et le numéro de port de destination contenu dans l'adresse de destination construite.

Une telle vérification permet de s'assurer que le numéro de port de destination du paquet de données au niveau transport coïncide bien avec le numéro de l'adresse de destination construite du paquet. Cette vérification présente un intérêt particulier si l'adresse IPv4 fictive affectée à la passerelle domestique est partagée avec plusieurs autres terminaux ou passerelles domestiques. En effet, dans ce cas, la discrimination entre ces équipements est faite sur la base de la plage de numéros de ports utilisée. Avec l'invention, le routage d'un paquet émis par terminal IPv4 vers ladite adresse fictive peut avoir lieu vers la passerelle concernée sans rencontrer de problème de routage.

Le procédé de réception peut être mis en oeuvre dans un dispositif de réception d'un paquet de données dans un domaine IPv6 interconnecté à un domaine IPv4, ledit paquet comprenant une adresse IPv6 de destination et une adresse IPv6 source, caractérisé en ce qu'il comprend les étapes suivantes :
- identification d'une adresse de destination construite par concaténation d'un préfixe opérateur, d'une adresse de destination IPv4 et d'un numéro de port de destination;
- si nécessaire, mise en conformité d'au moins une adresse du paquet de données; et
- routage du paquet de données modifié vers sa destination.

Dans un mode particulier de réalisation, les différentes étapes des procédés de réception d'un paquet de données sont déterminées par des instructions de programmes d'ordinateurs.

En conséquence, l'invention vise aussi un programme d'ordinateur sur un support d'informations, ce programme étant susceptible d'être mis en oeuvre dans un dispositif de réception ou plus généralement dans un ordinateur, ce programme comportant des instructions adaptées à la mise en oeuvre des étapes d'un procédé d'acheminement, de réception ou de transmission tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention concerne aussi une passerelle résidentielle apte à connecter des terminaux d'utilisateurs à un domaine IPv6 interconnecté à un domaine IPv4. Selon l'invention, une telle passerelle comprend :
- des moyens d'obtention d'une adresse IPv4, d'une plage de numéros de ports autorisés pour ladite passerelle et d'une plage d'adresses IPv6 autorisées pour ladite passerelle, ladite plage d'adresses IPv6 étant construite par concaténation d'un préfixe opérateur, de ladite adresse IPv4 et de la plage de numéros de ports IPv4 autorisés; et
- un dispositif de réception d'un paquet de données IPv6 dans le domaine IPv6 interconnecté au domaine IPv4 selon l'invention.

Selon l'invention, une telle passerelle ne traite que des paquets de données IPv6. Toutefois, une adresse IPv4 lui est affectée, de façon à ce qu'elle puisse être identifiée et être jointe par des émetteurs du domaine IPv4. La dite adresse n'est pas utilisée par la passerelle domestique pour l'envoi des paquets IP.

La passerelle résidentielle peut comprendre une table de traduction d'adresses, comprenant des entrées, associant, pour une session de communication impliquant terminal d'utilisateur de son réseau résidentiel, au moins une adresse source. Selon l'invention, ladite passerelle est apte à enregistrer dans ladite entrée, une adresse source IPv6 construite et une adresse source IPv6 native du terminal d'utilisateur

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un domaine IPv6 interconnecté à un domaine IPv4 selon l'invention;
- la figure 2 illustre la structure d'un préfixe d'adresses IPv6 construit selon l'invention;
- la figure 3 présente de façon schématique les étapes du procédé de réception d'un paquet de données dans un domaine IPv6 interconnecté avec un domaine IPv4 selon l'invention;
- la figure 4 illustre la structure d'une adresse IPv6 construite à partir d'une adresse de destination IPv4 et d'un port de destination selon un premier mode de réalisation de l'invention;
- la figure 5 illustre la structure d'une adresse de destination IPv6 construite à partir d'une adresse IPv4 et d'un port de destination selon l'invention pour la mise en oeuvre du procédé de réception selon le premier mode de réalisation de l'invention;
- la figure 6 illustre la structure d'une adresse source IPv6 construite à partir d'une adresse source IPv4 et d'un port source pour la mise en oeuvre du procédé de réception selon le premier mode de réalisation invention;
- la figure 7 illustre la structure d'une adresse IPv6 construite à partir d'une adresse IPv4 et d'un port de destination selon un deuxième mode de réalisation de l'invention;
- la figure 8 présente de façon schématique les étapes du procédé de réception d'un paquet de données dans un domaine IPv6 interconnecté avec un domaine IPv4 selon le deuxième mode de réalisation de l'invention;et

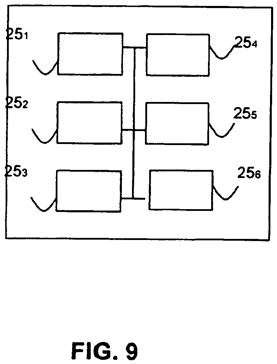

- la figure 9 présente de façon schématique la structure d'un dispositif de réception d'un paquet de données dans un domaine IPv6 selon l'invention;

### 7. Description d'un mode de réalisation particulier de l'invention

Le principe général de l'invention repose sur la construction d'une adresse IPv6 à partir d'une adresse IPv4, d'un préfixe opérateur prédéterminé et d'un numéro de port. Une telle construction permet la transformation d'un paquet IPv4 entrant dans un domaine IPv6 et inversement celle d'un paquet IPv6 sortant d'un domaine **IPv6** à destination d'un domaine IPv4, sans qu'il soit nécessaire de maintenir une table de correspondance entre les adresses IPv4 et IPv6 dans un noeud d'accès au domaine IPv6.

Pour rappel, les adresses IPv6 sont longues de 16 octets, soit 128 bits, contre 4 octets (32 bits) pour les adresses IPv4. On dispose ainsi d'un nombre potentiel d'adresses extrêmement grand par rapport au nombre d'adresses IPv4. Une adresse IPv6 comporte deux parties:
- la partie de gauche (le préfixe) identifie un sous-réseau du domaine ;
- la partie de droite identifie une machine connectée au sous-réseau.

Généralement, les préfixes les plus longs alloués à un sous-réseau sont des préfixes "/64"; c'est-à-dire qu'ils comportent 64 bits pour les identifier. Les 64 bits de droite de l'adresse sont alors utilisés pour identifier une machine particulière appartenant au sous-réseau. Des préfixes de longueurs plus courtes (exemple "/56" ou même "/48") permettent quant à eux d'identifier des sous-réseaux de plus grande ampleur, comportant souvent eux-mêmes des sous-réseaux "/64". Néanmoins, dans le standard IPv6, rien n'interdit d'utiliser des préfixes plus longs que "/64" et on peut donc imaginer, par exemple, un préfixe "/116" qui identifie un sous-réseau pouvant comporter 4096 machines.

On notera que la seule restriction à des préfixes plus longs que "/64" consiste simplement dans le fait que les machines derrière le sous-réseau correspondant ne pourront pas mettre en oeuvre le mécanisme d'auto-configuration décrit dans le document RFC2462. Ce mécanisme permet à une machine connaissant son adresse de niveau 2 (par exemple son adresse Ethernet MAC) de configurer elle-même, sous certaines conditions, les 64 bits de droite de son adresse IPv6, en dérivant son adresse de niveau 2 suivant un algorithme précis. Mais ce mécanisme d'auto-configuration n'est pas obligatoire et on peut préférer d'autres mécanismes comme par exemple celui correspondant au protocole DHCPv6 [RFC3315] qui permet, entre autres, d'obtenir une adresse IPv6 auprès d'un serveur DHCPv6.

Si on s'intéresse maintenant, non plus à une simple machine IPv6, mais à un routeur IPv6 (comme par exemple une passerelle résidentielle IPv6), on sait qu'un tel équipement doit disposer d'un (ou plusieurs) préfixes IPv6 qui représente(nt) le(s) sous-réseau(x) dont il route les paquets. Un routeur IPv6 doit donc être configuré avec un (ou plusieurs) préfixes.

Une extension de DHCPv6 permet à un routeur requérant un ou des préfixes IPv6 (comme par exemple une passerelle résidentielle) de les demander auprès d'un équipement pouvant en déléguer (typiquement un routeur en amont). Cette extension est décrite dans le RFC 3633 (*IPv6 Prefix Options for Dynamic Host Configuration Protocol (DHCP) version 6)* et spécifie une option "Identity Association for Prefix Delegation Option" dans les messages DHCPv6 pour passer le ou les préfixes délégués. Une fois que le routeur requérant s'est vu déléguer un ou des préfixes IPv6, il route tous les paquets IPv6 destinés ou issus de machines dont les adresses s'inscrivent dans le(s) préfixe(s) qu'il gère.

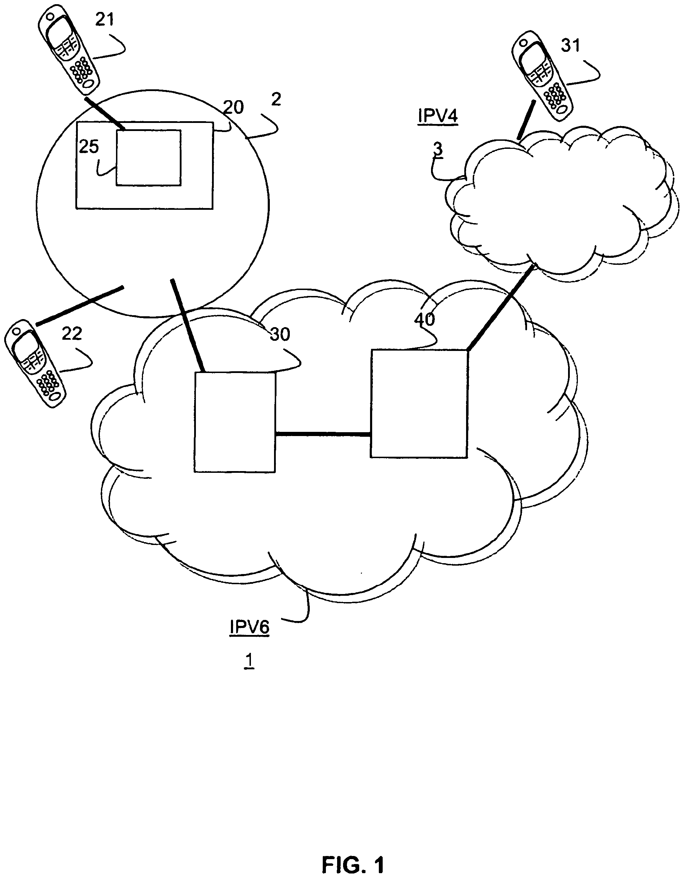

On présente maintenant, en relation avec la **figure 1****,** un domaine IPv6 1 comprenant un équipement d'interconnexion du domaine IPv6 1 avec un domaine IPv4 2 ou noeud d'accès IPv6/IPv4 40 à un domaine IPv4 2 et un routeur d'accès 30, apte à router des paquets de données vers ou en provenance d'une passerelle résidentielle 20 connectée au domaine IPv6 1. Une telle passerelle administre un réseau résidentiel 2 auxquels sont connectés les terminaux 21 et 22.

Dans le contexte de l'invention, on considère une passerelle résidentielle implémentant le protocole IPv6 seul. De ce fait, une telle passerelle n'est en mesure de traiter (en particulier, recevoir et émettre) que des paquets de données de type IPv6.

Les terminaux 21 et 22 sont eux aussi mono-version IPv6 (ou purement IPv6), c'est-à-dire qu'ils n'implémentent que le protocole IPv6. Nous verrons dans la suite en quoi l'invention permet une interconnexion d'un domaine IPv6 avec au moins un domaine IPv4 pour des terminaux IPv6.

On considère les cas "hybrides" suivants :
- acheminement d'un paquet de données IPv4 entrant émis par un terminal d'utilisateur du domaine IPv4 3 à destination d'un terminal d'utilisateur 21, 22 du réseau résidentiel de la passerelle 20 connectée au domaine IPv6 1; et
- acheminement d'un paquet de données IPv6 sortant émis par un terminal d'utilisateur 21, 22 du domaine IPv6 1 vers un terminal d'utilisateur du domaine IPv4 3.

Les cas d'une transmission de paquets purement IPv6 ou IPv4 étant connus de l'homme de métier, ils ne seront pas décrits plus en détails.

Pour pouvoir se connecter au domaine ou réseau IPv6, la passerelle résidentielle dispose d'éléments de connectivité IP fournis par le fournisseur de service de connectivité.

On notera toutefois que l'invention ne se limite pas à l'accès au service de connectivité IP, par exemple internet ou Intranet, par une passerelle résidentielle, mais qu'elle s'applique aussi à des terminaux d'utilisateurs dans d'autres contextes d'accès à Internet ou d'accès à un réseau Intranet. On peut citer par exemple l'accès à ce service de connectivité IP depuis un réseau mobile, selon lequel un terminal mobile évolué pourrait servir de passerelle, en communiquant avec d'autres terminaux de son réseau LAN (via Bluetooth par exemple) ou encore le cas d'un simple terminal mobile.

Selon l'invention, la passerelle résidentielle 20 dispose des éléments de connectivité IP suivants:
- une adresse IPv4 classique appelée dans la suite "@IPv4". Dans le cas où la passerelle héberge dans son réseau résidentiel des terminaux clients purement IPv6, cette adresse IPv4 est dite « fictive » car elle n'est pas utilisée par la passerelle pour envoyer/recevoir du trafic IP. Nous verrons dans la suite qu'elle est utilisée pour construire des adresses IPv6 selon l'invention
- une plage de numéros de ports autorisés appelée ports_pattern/length_of_unvariable;
- un préfixe d'adresses IPv6 construites appelé IPv6_prefix_ports_range; et
- un préfixe d'adresses appelé préfix IPv6 natif IPv6_prefix_native. Ce deuxième préfixe n'est toutefois pas obligatoire. Seul le préfixe IPv6 construit est suffisant.
Les éléments @IPv4, IPv6_prefix_ports_range et IPv6_prefix_native sont des éléments d'information standards dans le cadre habituel des protocoles IPv4 et IPv6.

Selon l'invention, l'élément d'information IPv6 _prefix_ports_range contient intrinsèquement les éléments @IPv4 et ports_pattern/length_of_unvariable.

Dans un mode de réalisation de l'invention, l'adresse IPv4 @IPv4 est une adresse shared@IPv4 partagée par plusieurs passerelles résidentielles du domaine IPv6 1 et la plage de numéros de ports autorisés pour la passerelle résidentielle 20 est une plage de numéros de ports réservés à cette passerelle.

On comprendra que le fait de partager l'adresse publique shared@IPv4 entre plusieurs passerelles résidentielles permet d'économiser le nombre d'adresses IPv4 utilisées et de retarder le phénomène d'épuisement. En outre, son utilisation est justifiée par le besoin d'interconnecter des domaines IPv4 avec d'autres IPv6. Cette interconnexion se fait en général via des adresses de représentation. Si le parc de clients IPv6 est grand, alors les adresses de représentation IPv4 requises est conséquent.

Les différentes passerelles résidentielles qui se partagent la même adresse shared@IPv4 sont identifiées de façon unique par les numéros de ports qu'elles utilisent, puisque chacune d'entre elle bénéficie d'une plage de numéros de ports contigüe, certes restreinte, mais qui lui est réservée.

L'invention propose une interconnexion entre domaines IPv6 et IPv4 qui nécessite l'affectation d'adresses IPv4 pour fonctionner et assurer ainsi une continuité de connectivité entre terminaux hétérogènes (c'est-à-dire qui implémentent des protocoles d'adressage différents, tels que IPv4 et IPv6) d'une manière transparente.

Un avantage du mode de réalisation de l'invention, selon lequel les adresses IPv4 sont partagées, est donc de faciliter la migration vers l'adressage IPv6 tout en économisant les adresses IPv4. Dans un contexte de transition entre les deux modes d'adressage IPv4, IPv6, une telle économie peut avantageusement permettre d'éviter la pénurie tant que la migration n'est pas terminée. Un autre avantage est d'avoir un retour sur investissement immédiat pour les équipements IPv6 (car l'utilisation des capacités IPv6 ne dépend pas du comportement des clients mais de l'opérateur lui-même).

Dans la suite de la description, on considère l'exemple de réalisation selon lequel l'adresse IPv4 affectée à la passerelle 20 est une adresse partagée Shared@IPv4.

En relation avec la figure 1, la passerelle résidentielle 20 est connectée au réseau de l'opérateur par un routeur d'accès 30. Il s'agit du premier routeur que les paquets de données IPv6 et IPv4 rencontrent lorsqu'ils sortent de la passerelle résidentielle.

Suivant l'architecture réseau adoptée au niveau du routage IPv6, le routeur d'accès 30 peut annoncer en direction de l'amont du réseau (i.e. vers le réseau 1 du fournisseur de service de connectivité IP) les préfixes IPv6 qu'il route, c'est-à-dire les préfixes IPv6_prefix_ports_range et IPv6_prefix_native des passerelles résidentielles qu'il dessert.

Le routeur d'accès 30 obtient les préfixes IPv6 des passerelles résidentielles qu'il dessert de façon tout à fait classique dans un environnement réseau IPv6. On peut citer deux méthodes qui sont décrites ci-dessous:
1- il reçoit les annonces de routage IPv6 des passerelles résidentielles qu'il dessert (IPv6_prefix_ports_range et IPv6_prefix_native). A cet effet, chaque passerelle résidentielle annonce ses préfixes vers l'amont (IPv6_prefix_ports_range et IPv6_prefix_native); ou
2- Il obtient les différents IPv6_prefix_ports_range et IPv6_prefix_native par délégation de préfixes comme décrit dans le RFC 3633 (*IPv6 Prefix Options for Dynamic Host Configuration Protocol (DHCP) version 6).*

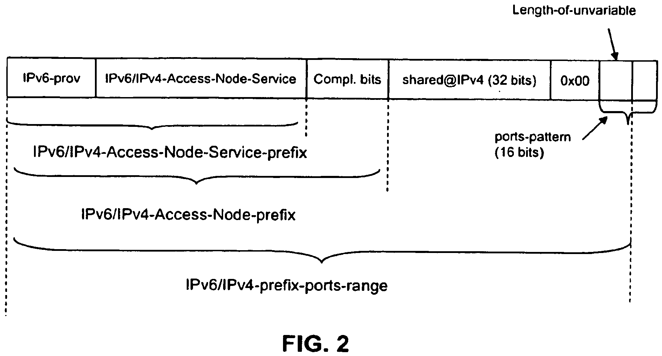

En relation avec la **figure 2****,** on présente maintenant un exemple de constitution d'un préfixe d'adresses IPv6 construites selon l'invention, tel que le préfixe IPv6_prefix_ports_range affecté à la passerelle résidentielle 20.

Ce préfixe IPv6 englobe les bits de l'adresse IPv4 publique Shared_@IPv4 et la plage de numéros de ports autorisés (ports_pattern/length_of_unvariable) pour la passerelle 20, et permet de façon univoque de router le paquet IPv6 entrant jusqu'à la passerelle résidentielle destinatrice. Il s'agit d'un préfixe IPv6 qui est routable dans un réseau IPv6. Il pourrait même être routé dans l'Internet IPv6, si l'on choisissait qu'il soit un préfixe s'inscrivant dans le préfixe de l'opérateur de réseau fournissant la passerelle résidentielle (particulièrement s'il était annoncé dans BGP (Border Gateway Protocol)). Selon l'exemple de la figure 2, ce préfixe comprend de gauche à droite :
- le préfixe IPv6 affecté au noeud d'accès 40 : préfixe IPv6/IPv4_Access_Node_prefix ;
   De façon avantageuse, ce préfixe est choisi de telle sorte qu'il s'inscrive dans le préfixe opérateur IPv6 IPv6-prov affecté au fournisseur de service de connectivité IP par son RIR (Regional Internet Registry) et donc qu'il comporte ce préfixe opérateur dans ses premiers bits :
- les bits IPv6/IPv4_Access_Node_Service identifiant chez l'opérateur le service d'interconnexion IPv6/IPv4_Access_Node selon la présente invention. La séquence composée des bits du préfixe opérateur suivis des bits IPv6/IPv4_Access_Node_Service compose le préfixe IPv6/IPv4_Access_Node_Service_prefix qui identifie le service ;
- des bits complémentaires identifiant un noeud d'accès particulier IPv6/IPv4_Access_Node desservant la passerelle résidentielle. Pour des raisons de partage de charge (ou Load-balancing), le préfixe IPv6/IPv4_Access_Node_prefix peut n'être pas spécifique à un seul noeud d'accès.

- Les 32 bits de l'adresse Shared_@IPv4 de la passerelle 20 ;
- De façon optionnelle, 8 bits réservés, mis à 0. Cet octet peut servir à faire la distinction entre les différents types de ports (UDP, TCP, SCTP, etc.) Il prendrait la valeur "X" pour le traitement UDP et "Y" pour le traitement "TCP", etc.
- Les 16 bits représentant la plage de numéros de ports autorisés pour la passerelle ou "ports_pattern", avec une partie invariable à gauche dans ces 16 bits (bits de poids le plus fort), de longueur length_of_unvariable, étant significative. On notera que dans le cas où l'adresse IPv4 de la passerelle 20 n'est pas partagée par plusieurs passerelles résidentielles, la plage de numéros de ports autorisés est de taille maximale et identique pour toutes les passerelles.

La longueur du préfixe IPv6_prefix_ports_range est établie comme suit :
[ 128 - 16 (longueur d'une adresse IPv6 - adresse du codage d'un port) = 112 bits Plus length_of_unvariable (longueur des bits invariants représentant la plage de ports source autorisés). ]

On notera que le préfixe IPv6_prefix_ports_range constitué selon l'invention est plus long que les préfixes recommandés par le standard IPv6 pour un déploiement IPv6. Néanmoins, ceci ne l'empêche pas d'être conforme aux standards IPv6.

Le domaine IPv6 1 présenté en relation avec la figure 1 comprend au moins un noeud d'accès 40 selon l'invention. On notera qu'il peut en comprendre plusieurs autres. Le noeud d'accès 40 IPv6/IPv4_Access_Node est un routeur particulier Dual-Stack (IPv4 et IPv6), c'est-à-dire qu'il implémente à la fois les protocoles IPv4 et IPv6.

Dans le réseau 1, le noeud d'accès 40 IPv6/IPv4_Access_Node est typiquement situé en amont du ou des routeurs d'accès 30 (donc vers le coeur du réseau ou dans un segment d'interconnexion avec des réseaux adjacents), comme représenté sur la **figure 1**. Ledit noeud d'accès est aussi appelé noeud d'interconnexion.

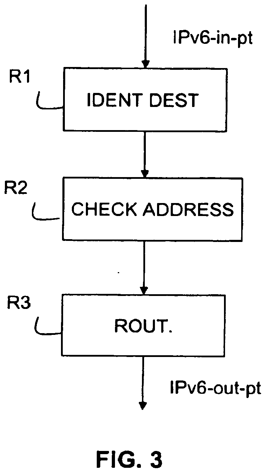

Le procédé de réception d'un paquet de données IPv6 dans le domaine IPv6 va maintenant être décrit en relation avec la figure 3. De façon avantageuse, il est mis en oeuvre par un dispositif de réception compris dans une passerelle résidentielle connectée au domaine IPv6, telle que la passerelle 20 et il est destiné à traiter aussi bien des paquets en provenance du réseau résidentiel 2 que des paquets de données en provenance du domaine IPv4 3. Un tel procédé comprend une étape R1 d'identification de l'adresse de destination IPv6 comme étant du type adresse de destination IPv6 native, soit comme étant du type adresse de destination IPv6 construite par concaténation d'un préfixe de noeud d'accès, d'une adresse IPv4 de destination et d'un numéro de port IPv4 de destination. On suppose ici que la passerelle 20 a obtenu ce préfixe au préalable, par exemple par configuration.

Il comprend ensuite une étape R2 de mise en conformité d'une adresse du paquet de données: Dans le sens réseau résidentiel vers un domaine IPv6, il s'agit de l'adresse source du paquet; dans le sens domaine IPv6 vers un réseau résidentiel, il s'agit de son adresse de destination. Une telle mise en conformité peut entraîner une modification du paquet de données. Le paquet de données modifié est ensuite routé en R3 vers sa destination.

Selon un premier mode de réalisation de l'invention, On considère l'établissement d'une communication sortante vers un destinataire IPv4 qui peut, par exemple, être un serveur Web IPv4 localisé dans le réseau Internet. Un terminal d'utilisateur du réseau résidentiel 2, par exemple le PC IPv6. 22 connecté à la passerelle 20, émet un paquet de données à destination de ce correspondant du domaine IPv4 3. Dans ce cas, l'application mise en oeuvre sur le PC est un browser IPv6. On rappelle que le terminal d'utilisateur source 22 est purement IPv6.

On distingue plusieurs cas :
- le terminal d'utilisateur 22 émet un paquet de données IPv6 à l'aide d'une adresse source égale à une adresse IPv6 construite qui lui a été affectée; ou
- le terminal d'utilisateur 22 émet un paquet de données IPv6 à l'aide d'une adresse source égale à une adresse IPv6 native qui lui a été affectée.

On comprend que le paquet de données comprend une adresse de destination IPv6 correspondant au destinataire IPv4 que le terminal doit avoir récupéré au préalable.

Le browser du terminal 22 a donc besoin de connaître l'adresse IPv6 du serveur Web destinataire. Or, le serveur Web n'est accessible qu'en IPv4. Il faut donc que le terminal 22 dispose d'une adresse IPv6 qu'il considérera comme l'adresse du serveur Web (alors qu'en réalité le serveur Web ne dispose que d'une adresse IPv4).

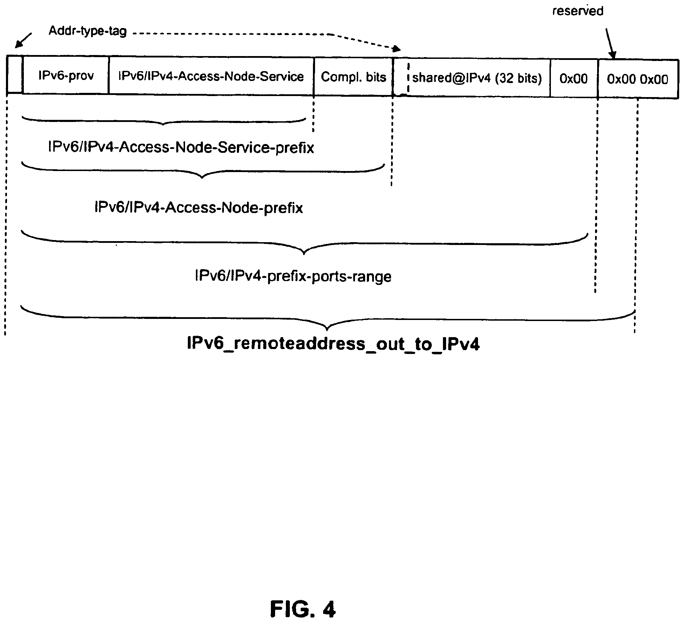

Pour ce faire, une fonction de traduction d'une adresse IPv4 du serveur Web en une adresse IPv6 doit être implémentée par le fournisseur de service de connectivité IP ou par une partie tierce. Cette fonction de traduction doit respecter un formalisme de construction de l'adresse IPv6 de telle manière qu'elle contienne l'adresse IPv4 du correspondant (le serveur Web dans notre exemple). Cette fonction de traduction va maintenant être décrite en relation avec la **figure 4****.**

Une telle fonction de traduction que nous appellerons DNS_IPv4toIPv6 peut être réalisée, par exemple, par le noeud d'accès 40 IPv6/IPv4_Access_Node du domaine IPv6 1, mais de façon plus générale, on considère qu'elle est mise en oeuvre par un serveur DNS du domaine 1. La fonction DNS_IPv4toIPv6 est le point de contact par défaut pour toute demande de résolution DNS émise par un terminal demandeur. Par défaut, cette fonction examine d'abord les enregistrements IPv6 de type "AAAA", autrement dit les adresses IPv6 natives. Si un enregistrement est déjà présent, une réponse est alors émise vers le terminal demandeur. Si aucun enregistrement n'est présent, une demande de résolution de type "A" est alors effectuée par la fonction de traduction DNS_IPv4toIPv6. Sur réception de la réponse d'un serveur DNS comprenant l'adresse IPv4 du correspondant (le serveur Web dans notre exemple), la fonction DNS_IPv4toIPv6 transforme l'adresse IPv4 reçue dans la réponse en adresse IPv6, suivant le formalisme présenté en relation avec la figure 4 et garde cette information dans son cache.

On notera que l'exemple de la **figure 4** n'est qu'un mode de réalisation, l'essentiel étant que l'adresse IPv4 du correspondant (ici le serveur Web) soit inscrite dans une adresse IPv6. Si aucune réponse n'est reçue de la part d'un serveur DNS, alors un message d'erreur est transmis au terminal demandeur.

Nous appellerons IPv6_remoteAddress_out_to_IPv4 l'adresse du destinataire (ici le serveur Web) ainsi transformée en IPv6. On notera que le terminal demandeur peut récupérer une adresse IPv6 de la machine distante à contacter par d'autres moyens, par exemple auprès d'un serveur.

Dans tous les cas, l'adresse IPv6 du correspondant (ici le serveur Web) peut être une adresse IPv6 native ou une adresse IPv6 respectant le formalisme introduit par la présente invention. Dans le cas d'une adresse IPv6_remoteAddress_out to_IPv4 construite, elle est incluse dans le préfixe IPv6/IPv4_Access_Node_Service_prefix.

En relation avec la figure 4, on remarque que la séquence de 2 octets la plus à droite est marquée "réservée" et mise à 0 par défaut. Cet emplacement correspond à celui des bits de ports dans une adresse IPv6 IPv4inIPv6_dest_address pour les paquets destinés à un terminal d'utilisateur. Il est réservé de manière à pouvoir indiquer un port sur lequel le correspondant (ici le serveur Web) désire se faire appeler en particulier. Il pourrait s'agir d'un correspondant IPv4 qui lui aussi se verrait affecté une adresse IPv4 partagée entre plusieurs correspondants et qui donc ne disposerait pas de tous les ports disponibles.

Le terminal 22 émet ensuite un paquet de données IPv6 comprenant l'adresse IPv6_remoteAddress_out_to_IPv4 comme adresse de destination.

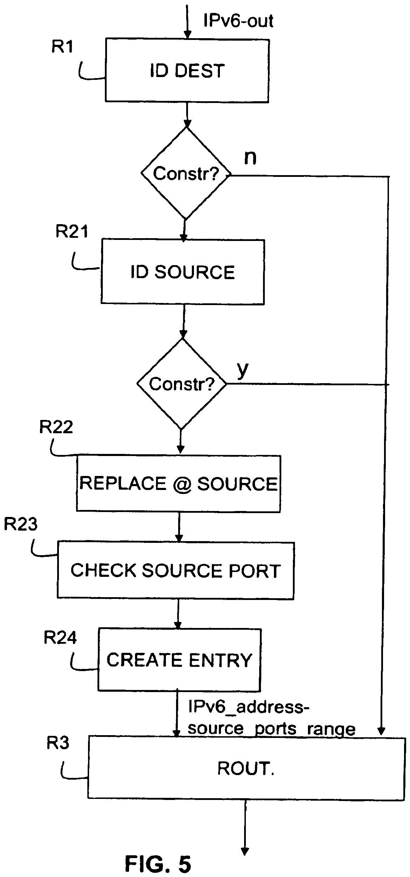

La passerelle résidentielle 20 selon l'invention comprend un dispositif de réception d'un paquet de données selon l'invention. Sur réception de ce paquet IPv6, un tel dispositif est apte à mettre en oeuvre le procédé de transmission d'un paquet IPv6 à destination d'une adresse IPv6 représentant une machine connectée à un domaine IPv4 selon le premier mode de réalisation de l'invention, qui va maintenant être décrit en référence à la **figure 5****.**

Un tel procédé met en oeuvre l'étape R1 d'identification de l'adresse de destination IPv6 précédemment décrite.

Selon un aspect de l'invention, la passerelle résidentielle 20 connaît la longueur du préfixe IPv4_Access_Node_Service_prefix, pour aisément déterminer sa valeur en prenant les bits correspondants dans son IPv6_prefix_ports_range. Une telle identification consiste à classer comme une adresse construite une adresse IPv6 de destination qui s'inscrit dans le préfixe IPv6/IPv4_Access_Node_Service_prefix et à considérer toutes les adresses hors de ce préfixe comme des adresses natives.

Un avantage de cette identification est qu'elle est simple.

Cette méthode d'identification n'est valable toutefois que dans le contexte d'un seul opérateur. Pour un déploiement grand échelle avec mutualisation de noeuds d'interconnexion entre les domaines IPv4 et IPv6, cette méthode n'est plus appropriée.

Une telle identification peut consister à rechercher dans l'adresse de destination un identificateur ou tag, dont la valeur peut être représentative d'une adresse native ou d'une adresse construite. A titre d'exemple, comme indiqué sur la **figure 4**, un tel identificateur peut avoir une longueur d'un seul bit ADDR_TYPE_TAG, valorisé à 0 ou 1 pour indiquer qu'il s'agit d'une adresse native ou construite. L'identifiant ADDR_TYPE_TAG peut être positionné, par exemple, au début de l'adresse IPv6 construite pour faciliter les opérations de lecture, ou encore entre le IPv6/IPv4_Access_Node_Service_prefix et l'adresse IPv4.

Un avantage de l'identifiant ADDR_TYPE_TAG est qu'il permet une mutualisation des équipements d'interconnexion IPV4 IPv6 entre plusieurs opérateurs et donc un partage des coûts. Ainsi, un opérateur Oi peut assurer l'interconnexion IPv4-IPv6 pour une région Ri (avec un ensemble de préfixes IPv4 Pi). Pour les autres opérateurs Oj, seules les adresses construites par un opérateur Oi (sur la base des préfixes IPv4) sont visibles, par le biais d'annonces BGP.

On comprend bien que d'autres préfixes que le IPv6/IPv4 peuvent exister, mais ils ne sont pas utilisés pour rendre ce service de connectivité et le traitement qui leur est appliqué est celui d'un paquet IPv6 natif, c'est-à-dire qu'il est routé directement vers le routeur d'accès IPv6 30;

Si l'adresse IPv6 de destination est classée comme construite, le procédé de transmission selon l'invention réalise une étape R2 de mise en conformité de l'adresse source du paquet à transmettre.

Dans ce premier mode de réalisation de l'invention, une telle mise en conformité consiste à identifier en R₂₁ si l'adresse source est une adresse construite ou native. Une adresse est considérée comme construite s'il s'agit d'une adresse IPv6 source qui s'inscrit dans le préfixe IPv6/IPv4_Access_Node_Service_prefix, toutes les adresses hors de ce préfixe étant considérées comme des adresses sources natives. Si l'identifiant ADDR_TYPE_TAG est utilisé, alors une adresse est identifiée comme construite si l'identifiant ADDR_TYPE_TAG est positionné à « 1 ».

Si l'adresse source est construite, le paquet de données est routé vers sa destination en R3.

Si l'adresse IPv6 source est classée comme native, le procédé selon l'invention met en oeuvre, préalablement à cette étape de routage, une étape R₂₂ destinée à choisir une adresse IPv6 source construite dont le numéro de port source est dans la plage autorisée ports_pattern/length_of_unvariable affectée à la passerelle 20 et à modifier le paquet de données en remplaçant l'adresse source native par cette adresse construite. En R₂₄, le procédé selon l'invention crée une entrée dans la table de traduction d'adresses de la passerelle, ladite entrée comprenant une association de l'adresse source native et de l'adresse source ainsi construite.

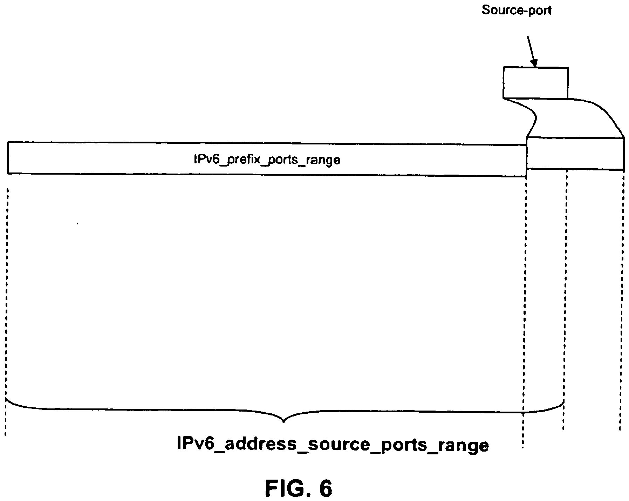

De façon avantageuse, le procédé selon l'invention peut en outre de vérifier en R₂₃ une concordance du numéro de port source contenu dans l'adresse source construite avec le numéro de port source de niveau transport du paquet de données. En relation avec la **figure 6**, on voit qu'une telle création consiste à prendre une adresse IPv6 quelconque de 128 bits comprenant comprise dans le IPv6_prefix_ports_range et à y recopier dans les 16 bits de droite les bits du port source utilisé (le port TCP ou UDP du paquet IPv6 reçu du terminal 22) dans le paquet de données à transmettre.

On comprendra que cette étape est nécessaire pour que le noeud d'accès IPv6/IPv4 40 puisse traduire le paquet de données IPv6 en un paquet de données IPv4 avant de le router vers le domaine IPv4 destinataire. Elle présente un autre avantage dans le cas où l'adresse IPv4 affectée à la passerelle résidentielle 20 est une adresse partagée par plusieurs passerelles résidentielles du domaine IPv6 1. En effet, comme évoqué précédemment, la passerelle résidentielle 20 ne peut utiliser que les numéros de port source appartenant à une plage de numéros de port restreinte qui lui a été réservée.

On notera également que si la passerelle résidentielle 20 a bien contraint le port source à être dans la plage de numéros de ports autorisés ports_pattern/length_of_unvariable, alors l'adresse source construite:
- est inscrite dans le préfixe IPv6_prefix_ports_range; et
- ses 16 derniers bits sont identiques au numéro de port source du paquet IPv6 reçu du terminal par la passerelle;

Dans la suite, on appellera IPv6_address_source_ports_range l'adresse source IPv6 ainsi formée.

En R3, le paquet IPv6 comprenant l'adresse IPv6 source contrainte IPv6_address_source_ports_range est ensuite routé vers le routeur d'accès IPv6 30 qui dessert la passerelle.

Le routeur d'accès IPv6 30 vérifie que l'adresse source IPv6 IPv6_address_source_ports_range est bien autorisée pour la passerelle résidentielle 20. Il vérifie en d'autres termes qu'il n'y a pas de "spoofing", c'est-à-dire que la passerelle résidentielle 20 émet bien des paquets IPv6 dans son préfixe IPv6_prefix_ports_range autorisé. Pour cela le routeur d'accès IPv6 30 vérifie que l'adresse source IPv6 IPv6_address_source_ports_range du paquet IPv6 reçu de la passerelle 20 est bien inscrite dans le préfixe IPv6_prefix_ports_range affecté à cette passerelle résidentielle. Cette vérification est effectuée de façon classique selon un principe déjà utilisé pour le trafic IPv6 natif.

Si cette vérification est positive, le routeur d'accès IPv6 30 route le paquet IPv6 vers sa destination.

Puisque l'adresse IPv6 de destination s'inscrit dans le préfixe IPv6/IPv4_Access_Node_prefix caractérisant le noeud d'accès IPv6/IPv4_Access_Node 40 au domaine IPv6, le paquet de données est routé vers ce noeud d'accès. On suppose, par exemple, qu'un tel noeud est placé dans le domaine IPv6 1 au plus près du ou des domaines IPv4 qu'il dessert, afin d'optimiser le routage des paquets de données vers ces domaines, mais l'invention ne se limite pas à une telle situation du noeud d'accès 40, ledit noeud d'accès pouvant être situé n'importe où dans le domaine 1.

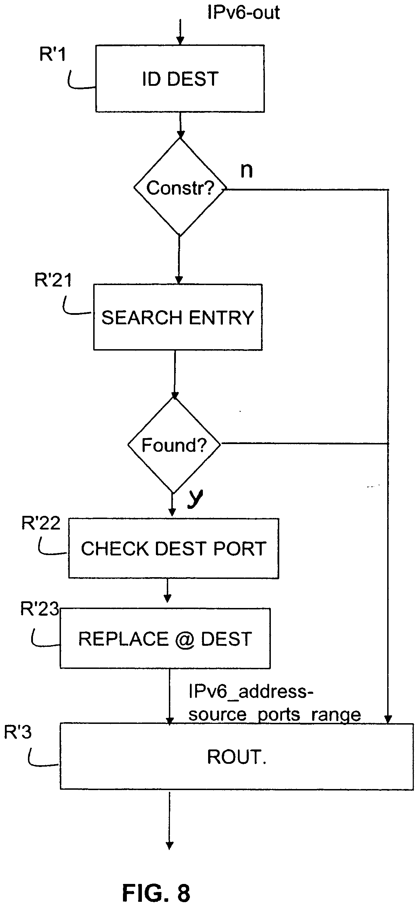

Sur réception du paquet IPv6, le noeud d'accès IPv6/IPv4_Access_Node 40 achemine le paquet de données sortant à destination d'un domaine IPv4 de la façon suivante :
- Il extrait une adresse de destination IPv4 et d'un port de destination de l'adresse de destination IPv6 et une adresse source IPv4 et d'un port source de l'adresse source IPv6 ;
- Il traduit ensuite le paquet IPv6 en un paquet IPv4 qui a les caractéristiques suivantes :
   o son adresse source IPv4 est l'adresse IPv4 Shared_@IPv4 de la passerelle résidentielle 20. C'est cette adresse Shared_@IPv4 que verra le destinataire du paquet de données IPv4 transmis (le serveur Web). Pour rappel, cette adresse IPv4 Shared_@IPv4 est incluse dans le préfixe IPv6_prefix_ports_range et donc dans l'adresse IPv6 source IPv6_address_source_ports_range. En relation avec la figure 8, l'adresse IPv4 Shared_@IPv4 peut être extraite des bits 24 à 55 ;
   o son adresse de destination IPv4 est l'adresse IPv4 du correspondant. En relation avec la figure 4, l'adresse IPv4 du destinataire peut être extraite des bits 24 à 55 de l'adresse IPv6_remoteAddress_out_to_IPv4 du paquet de données IPv6 reçu par le noeud d'accès 40 ;
   o la valeur du numéro de port source du paquet de données IPv4 traduit est le numéro du port source du paquet IPv6 reçu ;
   o le numéro de port de destination du paquet de données IPv4 traduit est le même que celui du paquet IPv6 ;
   o la partie utile du paquet IPv6 est la partie utile du paquet IPv4 traduit;

On notera que les champs de l'en-tête du paquet IPv6 sont traduits en champs IPv4 correspondant de façon classique, par exemple selon les principes du standard NAT-PT (*Network Address Translation- Protocol Translation*)*.*
- Il route enfin le paquet IPv4 traduit vers son destinataire (le serveur Web IPv4 dans notre exemple).

On comprend que, lorsque l'adresse IPv4 affectée à la passerelle résidentielle 20 est une adresse publique partagée entre plusieurs passerelles, il est nécessaire que le numéro de port source contenu dans l'adresse IPv6 source construite du paquet de données reçu appartienne bien à la plage de numéros de ports réservés à cette passerelle. En effet, si ce n'était pas le cas, le noeud d'accès pourrait traduire le paquet IPv6 à transmettre en un paquet de données IPv4, mais les éventuels paquets de réponse émis par le destinataire ne parviendraient pas à la passerelle résidentielle.

De façon avantageuse, le noeud d'accès 40 contrôle l'appartenance du port source à la plage de numéros de ports source affectée à la passerelle 20. Une telle étape consiste à contrôler que les derniers 16 bits de l'adresse source IPv6 du paquet sont identiques aux 16 bits du port source dans le champ correspondant TCP ou UDP du paquet IPv6. Il s'agit d'un contrôle indirect, qui peut faire suite à la vérification par le routeur d'accès du fait que la passerelle résidentielle a bien envoyé un paquet dont l'adresse source est dans son préfixe. A l'issue de ces deux étapes, on peut être certain que la passerelle résidentielle 20 a bien émis un paquet de données comprenant un port source inclus dans sa plage de ports autorisés et n'a pas utilisé celle d'une autre passerelle résidentielle.

Selon un deuxième mode de réalisation de l'invention, on considère le cas d'un paquet de données IPv4-in-pt entrant dans un domaine IPv6 en provenance d'un domaine IPv4 et destiné à un terminal d'utilisateur du domaine IPv6 1, par exemple le terminal 21. Le terminal se situe derrière la passerelle résidentielle 20 qui dispose d'une adresse IPv4 @IPv4 ou Shared_@IPv4 et d'une plage de ports autorisés ports_pattern/length_of_unvariable.

Le paquet IPv4-in-pt entrant, s'il est destiné au terminal d'utilisateur 21 du réseau résidentiel de la passerelle résidentielle 20, comprend une adresse de destination IPv4 égale à Shared_@IPv4 et un port de destination s'inscrivant dans la plage de numéros de ports autorisés ports_pattern/length_of_unvariable de la passerelle résidentielle 20.

Comme évoqué précédemment en relation avec la **figure 2**, l'adresse Shared_@IPv4 et la plage de numéros de ports ports_pattern/lenght_of_unvariable se retrouvent dans le préfixe IPv6_prefix_ports_range de la passerelle résidentielle 20.

Le paquet IPv4-in-pt est reçu par le noeud d'accès 40. En effet, dans une étape préalable, le fournisseur de connectivité IP a annoncé aux domaines IPv4 avec lesquels il a une interface, les adresses IPv4 affectées à des passerelles résidentielles du domaine 1 à destination desquelles il avait la charge d'acheminer les paquets IPv4. Il a fait cette annonce, soit par l'intermédiaire du noeud d'accès 40 lui-même ou d'un ASBR (Autonomous System Border Router) selon une technique connue de l'homme de métier.

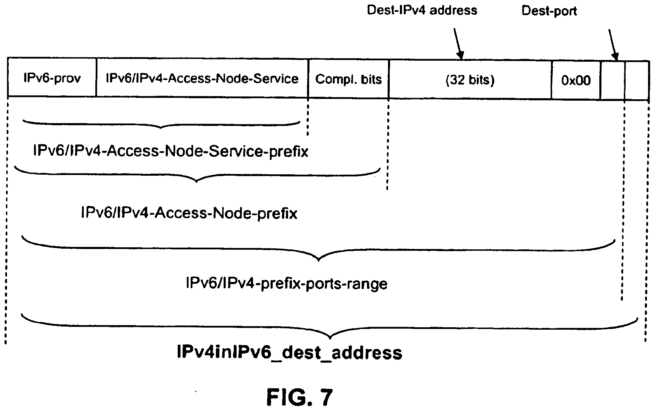

Le paquet IPv4-in-pt comprend une adresse de destination @IPv4 ou shared@IPv4 gérée par le noeud d'accès 40 et un port de destination dest-port. Le noeud d'accès 40 est apte à construire une adresse de destination IPv6 IPv4inIPv6_dest_address par concaténation d'un préfixe IPv6/IPv4_Access_Node_prefix du noeud d'accès 40, de ladite adresse de destination IPv4 shared-@IPv4 et du numéro de port de destination dest-port, comme décrit en relation avec la **figure 7****.**

Le numéro de port de destination dest-port est inséré dans la partie droite de l'adresse de destination IPv6 construite. Il insère donc à la fois les 32 bits de l'adresse IPv4 de destination du paquet IPv4 reçu et les 16 bits du port de destination dest-port pour constituer une adresse IPv6 de destination construite que nous appelons IPv4inIPv6_dest_address.

Le noeud d'accès 40 génère ensuite un paquet de données IPv6 IPv4inIPv6-pt à partir de l'adresse de destination IPv6 IPv4inIPv6_dest_address construite et du paquet de données IPv4 reçu. Un mode de réalisation consiste à traduire le paquet IPv4 reçu dans un paquet IPv6:
- dont l'adresse source IPv6 est une des adresses IPv6 dont dispose l'IPv6/IPv4_Access_Node 40 en propre (pour une de ses interfaces);
- et dont l'adresse de destination IPv6 est l'adresse IPv4inIPv6_dest_address.

Un autre mode de réalisation consiste à traduire le paquet IPv4 IPv4-in-pt reçu en un paquet IPv6 auquel on associe l'adresse IPv6 construite après avoir préalablement extrait du paquet IPv4 reçu son adresse IPv4 de destination, son port de destination, son adresse IPv4 source et son port source.

Le paquet de données IPv6 IPv4inIPv6-pt généré à l'aide de l'adresse de destination IPv6 construite est routé dans le domaine IPv6 1. Le paquet IPv4inIPv6-pt passe donc dans le coeur de routage IPv6 du noeud d'accès 40 IPv6/IPv4_Access_Node.

Par construction, son adresse de destination IPv4inIPv6_dest_address s'inscrit dans le préfixe IPv6_prefix_ports_range de la passerelle résidentielle 20. Le paquet IPv4inIPv6-pt est routé vers l'interface du noeud d'accès IPv6/IPv4_Access_Node 40 qui dessert la route IPv6 correspondante vers de la passerelle résidentielle 20.

On notera que si l'adresse de destination IPv4inIPv6_dest_address ne s'inscrivait dans aucun préfixe IPv6_prefix_ports_range (ou aucun préfixe englobant), le paquet serait détruit à un moment à un autre sur la route, car il ne pourrait être routé vers aucun préfixe IPv6_prefix_ports_range et donc vers aucune passerelle résidentielle.

Si l'adresse de destination IPv4inIPv6_dest_address s'inscrit bien dans le préfixe IPv6_prefix_ports_range, le paquet IPv4inIPv6-pt parvient au routeur_d'acces_dual_stack 30 desservant la passerelle résidentielle 20 qui héberge le terminal d'utilisateur 21 dans son réseau résidentiel 2. Il est routé par le routeur_d'acces_dual_stack 30 vers la passerelle résidentielle, lequel connaît la route vers le préfixe IPv6_prefix_ports_range.

Selon ce deuxième mode de réalisation de l'invention, la passerelle résidentielle 20 comprend un dispositif mettant en oeuvre le procédé de réception du paquet de données IPv4inIPv6-pt selon l'invention. Un tel procédé va maintenant être décrit en relation avec la **figure 8**.

Lorsque le paquet IPv4inIPv6-pt parvient à la passerelle résidentielle 20, celle-ci met en oeuvre l'étape R'1 d'identification de l'adresse de destination précédemment décrite.

Si une adresse de destination native est identifiée, le paquet de données est routé directement vers le terminal d'utilisateur destinataire, dans une étape R'3.

Si une adresse de destination construite est identifiée, par exemple à l'aide d'un identifiant compris dans l'adresse de destination, l'étape de mise en conformité du procédé de réception d'un paquet de données selon l'invention comprend une étape R'₂₁ de recherche dans la table de traduction de la passerelle résidentielle d'une entrée comprenant l'adresse de destination construite. Si cette recherche est positive, une telle entrée associe à l'adresse de destination construite une adresse de destination native IPv6_address_native-UE du terminal destinataire. En R'₂₃, le procédé selon l'invention remplace l'adresse de destination construite par cette adresse native dans le paquet de données IPv6. Ce remplacement est particulièrement avantageux dans le cas où le paquet de données IPv4-in-pt fait partie d'une réponse à un paquet de données émis préalablement par le terminal destinataire 21 avec son adresse source IPv6 native, et pour lequel la passerelle avait en effet préalablement stocké cette adresse native dans sa table de NAT avant sa transmission, comme décrit dans le mode de réalisation précédent de l'invention. A ce moment-là, elle avait crée l'entrée dans sa table de traduction et remplacé cette adresse native par l'adresse construite du terminal 21, afin de permettre au noeud d'accès 40 d'en extraire une adresse source IPv4 lors de la transformation du paquet IPv6 sortant en un paquet IPv4.

De façon avantageuse, l'étape de mise en conformité comprend en outre une étape R'22 de vérification d'une concordance du port de destination de niveau transport du paquet de données avec le numéro de port de destination contenu dans l'adresse de destination du paquet. Si les deux numéros de port ne concordent pas, le paquet est rejeté. Ceci ne doit pas avoir lieu si la traduction a été effectuée par le noeud d'accès, mais cette étape peut être utilisée pour réaliser un contrôle de flux en provenance du noeud d'accès.

En R'3, le paquet de données est routé par la passerelle vers le terminal destinataire de son réseau résidentiel.

Dans l'exemple décrit en relation avec la **figure 1**, la passerelle résidentielle 20 selon l'invention comporte un dispositif 25 de réception d'un paquet de données dans un domaine IPv6, qui va être maintenant décrit en relation avec la **figure 10**. Il comprend les éléments matériels que l'on retrouve classiquement dans un ordinateur conventionnel ou un routeur spécialisé, à savoir un processeur 25₁, une mémoire vive de type RAM 25_{2.} une mémoire morte de type ROM 25₃ et des moyens 25₄ de télécommunications avec le réseau 1.

Conformément à l'invention, le dispositif 25 comporte une mémoire 25₅ comprenant une base de données dans laquelle est stockée une table de traduction d'adresses ou NAT entre le domaine 1 et son réseau résidentiel 3.
On notera que cette mémoire peut aussi bien être externe au dispositif 25 pourvu qu'il puisse y accéder.

La mémoire morte 25₅ constitue un support d'enregistrement conforme à l'invention. Ce support mémorise le programme d'ordinateur conforme à l'invention. Ce programme comporte des instructions pour l'exécution des étapes du procédé de réception d'un paquet entrant conforme à l'invention qui vient d'être décrit en référence aux figures 3, 5 et 8.

On notera également que le dispositif de réception peut aussi bien être inclus dans un terminal d'utilisateur connecté directement au réseau 1 du fournisseur de service de connectivité.

En résumé, l'invention permet une deuxième phase de migration des services de connectivité IP vers IPv6 à l'aide de mécanismes d'acheminement des paquets qui prennent en compte les faits suivants :
- La migration finale vers IPv6 prendrait plusieurs années (une échelle de 10 ans minimum). Ceci est dû principalement au nombre important des acteurs à « convaincre » pour un passage vers IPv6, le nombre important des AS (Autonomous System) (plus de 17000); de la diversité des mécanismes d'interconnexion. De plus, nous tenons à préciser que le problème des adresses ne concerne à priori que les opérateurs. Les clients n'ont aucune raison pour modifier l'architecture de leurs réseaux locaux. Une entreprise "Méchu" n'a pas de motivations pour migrer ses serveurs FTP, HTTP, etc. vers IPv6. Les opérateurs doivent s'attendre à un long travail d'accompagnement pour le passage vers IPv6 ;
- Les opérateurs de services souffrent d'un problème d'épuisement d'adresses IPv4 tel que décrit dans la section plus-haut ;
- La simple migration vers IPv6 d'un domaine donné ne résout pas le problème de la connectivité globale (joindre n'importe quelle machine distante présente sur Internet). En effet, une interconnexion avec le monde IPv4 doit être mise en place ;
- Une solution à base de NAT-PT avec état n'est pas recommandée. Le service fourni en serait dégradé, vu que les services à valeur ajoutée liés au « port forwarding » configuré par les clients ne fonctionneront pas et dépendront du comportement du « boitier » d'interconnexion entre un nuage IPv4 et un autre IPv6.

Les mécanismes d'acheminement des paquets IP selon l'invention permettent de promouvoir l'utilisation du protocole IPv6 de la façon suivante :
- activation d'IPv6 et mise en place d'une solution permettant de promouvoir le trafic IPv6 basée sur une fonction d'interconnexion placée dans le réseau, qui est sans état. La solution de l'invention n'utilise que la connectivité IPv6 des passerelles résidentielles et implique l'utilisation de terminaux d'utilisateurs et passerelles résidentielles IPv6. De ce fait ces équipements ne sont en mesure de traiter (recevoir et émettre) que des paquets de données de type IPv6.

La solution de l'invention permet :
- que le réseau d'accès ne soit qu'IPv6 et ainsi que l'opérateur d'accès n'ait pas à gérer le routage IPv4 à l'accès ;
- que les passerelles résidentielles n'aient aucune notion d'IPv4 et ne gèrent que l'IPv6 ;
- que les terminaux du réseau résidentiel de la passerelle résidentielle puissent n'utiliser qu'IPv6.

Une même adresse IPv4 peut être affectée à plusieurs passerelles résidentielles (ou autres équipements dans des contextes autres que l'accès Internet résidentiel). Il s'agit d'une affectation fictive au niveau de la passerelle résidentielle, puisque les passerelles résidentielles ne gèrent pas le routage IPv4. Les principes de bases sont les suivants :
- plage de ports source autorisés au niveau de chaque passerelle pour les communications sortantes ;
- préfixe IPv6 particulier IPv6_prefix_ports_range.

Les paquets IPv4 entrants dans le domaine IPv6 ne sont pas encapsulés par l'IPv6/IPv4_Access_Node pour être routés vers la passerelle résidentielle, mais ils sont traduits en paquets IPv6.
- Pour les communications sortantes, sur résolution DNS d'un correspondant IPv4, on retourne au terminal d'utilisateur initiateur une adresse IPv6 construite sur la base de l'adresse IPv4 du correspondant. Le terminal d'utilisateur utilise alors cette adresse de destination IPv6 pour émettre les paquets de données. Pour émettre ce paquet, il peut utiliser son adresse source IPv6 native ou construite.
- S'il a utilisé son adresse source native, la passerelle résidentielle transforme l'adresse IPv6 native source en une adresse source construite IPv6 contenant sa propre adresse IPv4 partagée entre les passerelles (Shared_@IPv4) et le port source (inscrit dans la plage source autorisée).
- Un équipement d'interconnexion du domaine IPv6 au domaine IPv4 vérifie que la passerelle résidentielle a bien utilisé sa plage de ports source autorisés en comparant la partie de l'adresse source qui contient les bits port source et le port source dans le champ port du paquet IPv6. Il traduit le paquet IPv6 en paquet IPv4 pour le transmettre au correspondant en utilisant :
   - pour l'adresse source IPv4 : les bits dans l'adresse IPv6 source qui contiennent Shared_@IPv4
   - pour l'adresse destination IPv4 : les bits dans l'adresse IPv6 qui contiennent l'adresse IPv4 du correspondant.

## Revendications

1. Procédé de réception d'un paquet de données IPv6 dans un domaine IPv6 interconnecté avec un domaine IPv4, ledit paquet comprenant une adresse IPv6 de destination et une adresse IPv6 source, ledit procédé étant mis en oeuvre dans une passerelle résidentielle apte à connecter un terminal d'utilisateur (21,22) audit domaine IPv6, comprenant les étapes suivantes :
- identification d'une adresse IPv6 de destination construite par concaténation d'un préfixe opérateur, d'une adresse de destination IPv4 et d'un numéro de port de destination;
- si nécessaire, mise en conformité d'au moins une adresse du paquet de données par remplacement de ladite adresse, ledit remplacement appartenant à un groupe comprenant un remplacement d'une adresse construite par une adresse native dudit terminal d'utilisateur (21,22) et un remplacement d'une adresse native dudit terminal d'utilisateur (21,22) par une adresse construite, et modification du paquet de données à l'aide de l'adresse mise en conformité; et
- routage du paquet de données modifié vers sa destination.

2. Procédé de réception selon la revendication 1, **caractérisé en ce que**, lorsque le paquet de données est en provenance dudit terminal d'utilisateur et à destination du domaine IPv4, l'étape de mise en conformité de l'adresse source comprend en outre les étapes suivantes :
- identification d'une adresse IPv6 source native;
- création d'une entrée dans une table de traduction d'adresses, ladite entrée associant ladite adresse source native à une adresse source construite par concaténation d'un préfixe opérateur, d'une adresse IPv4 affectée à la passerelle et d'un numéro de port source appartenant à une plage de numéros de ports autorisés pour ladite passerelle; et
- remplacement de l'adresse source native du paquet de données par l'adresse source construite.

3. Procédé de réception selon la revendication 2, **caractérisé en ce que** comprenant l'identification d'adresse est réalisée à l'aide d'un identifiant compris dans l'adresse de destination.

4. Procédé de réception selon la revendication 2, **caractérisé en ce qu'**il comprend en outre une étape de vérification d'une correspondance entre le numéro de port source du paquet de données et le numéro de port de source de l'adresse source construite.

5. Procédé de réception selon la revendication 1, **caractérisé en ce que**, lorsque le paquet de données est en provenance du domaine IPv4 et à destination dudit terminal d'utilisateur, l'étape de mise en conformité de l'adresse de destination comprend les étapes suivantes :
- recherche dans une table de traduction d'adresses de la passerelle d'une entrée associant à ladite adresse de destination construite une adresse de destination native:
- si une entrée a été trouvée, remplacement de l'adresse de destination construite du paquet de données par l'adresse de destination native de l'entrée.

6. Procédé de réception selon la revendication 5, **caractérisé en ce qu'**il comprend en outre une étape de vérification d'une correspondance entre le numéro de port de destination du paquet de données et le numéro de port de destination contenu dans l'adresse de destination construite,

7. Dispositif de réception d'un paquet de données dans un domaine IPv6 interconnecté à un domaine IPv4, ledit paquet comprenant une adresse IPv6 de destination et une adresse IPv6 source, ledit dispositif étant destiné à être mis en oeuvre dans une passerelle résidentielle apte à connecter un terminal d'utilisateur (21,22) audit domaine IPv6, comprenant les moyens suivants
- moyen d'identification d'une adresse IPv6 de destination construite par concaténation d'un préfixe opérateur, d'une adresse de destination IPv4 et d'un numéro de port de destination;
- moyen de, si nécessaire, mise en conformité d'au moins une adresse du paquet de données par remplacement de ladite adresse, ledit remplacement appartenant à un groupe comprenant un remplacement d'une adresse construite en une adresse native dudit terminal d'utilisateur (21,22) et un remplacement d'une adresse native dudit terminal d'utilisateur (21,22) en une adresse construite, et modification du paquet de données à l'aide de l'adresse mise en conformité; et
- moyen de routage du paquet de données modifié vers sa destination.

8. Passerelle résidentielle apte à connecter des terminaux d'utilisateurs d'un réseau résidentiel à un domaine IPv6 interconnecté à un domaine IPv4, comprenant :
- des moyens d'obtention d'une adresse IPv4, d'une plage de numéros de ports autorisés pour ladite passerelle et d'une plage d'adresses IPv6 autorisées pour ladite passerelle, ladite plage d'adresses IPv6 étant construite par concaténation d'un préfixe opérateur, de ladite adresse IPv4 et de la plage de numéros de ports IPv4 autorisés; et
- un dispositif de réception d'un paquet de données IPv6 dans le domaine IPv6 interconnecté au domaine IPv4 selon la revendication 7.

9. Passerelle résidentielle selon la revendication 8, comprenant une table de traduction d'adresses, comprenant des entrées, associant, pour une session de communication impliquant terminal d'utilisateur de son réseau résidentiel, au moins une adresse source, **caractérisée en ce que** ladite passerelle est apte à enregistrer dans ladite entrée, une adresse IPv6 source construite et une adresse IPv6 source native.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme qui, lorsqu'ils sont exécutées par un processeur, causent ce processeur d'exécuter le procédé de réception d'un paquet de données dans un domaine IPv6 selon la revendication **1**.

## Claims

1. Method for receiving an IPv6 data packet in an IPv6 domain interconnected with an IPv4 domain, said packet comprising a destination IPv6 address and a source IPv6 address, said method being implemented in a residential gateway able to connect a user terminal (21, 22) to said IPv6 domain, comprising the following steps:
- identification of a destination IPv6 address constructed by concatenating an operator prefix, an IPv4 destination address and a destination port number;
- if necessary, making compliant of at least one address of the data packet by replacement of said address, said replacement belonging to a group comprising a replacement of a constructed address with a native address of said user terminal (21, 22) and a replacement of a native address of said user terminal (21, 22) with a constructed address, and modification of the data packet with the aid of the address made compliant; and
- routing of the modified data packet to its destination.

2. Reception method according to Claim 1, **characterized in that**, when the data packet originates from said user terminal and is destined for the IPv4 domain, the step of making compliant of the source address furthermore comprises the following steps:
- identification of a native source IPv6 address;
- creation of an entry in an address translation table, said entry associating said native source address with a source address constructed by concatenating an operator prefix, an IPv4 address assigned to the gateway and a source port number belonging to a range of port numbers authorized for said gateway; and
- replacement of the native source address of the data packet with the constructed source address.

3. Reception method according to Claim 2, **characterized in that** the address identification is carried out with the aid of an identifier included in the destination address.

4. Reception method according to Claim 2, **characterized in that** it furthermore comprises a step of verifying a correspondence between the source port number of the data packet and the source port number of the constructed source address.

5. Reception method according to Claim 1, **characterized in that**, when the data packet originates from the IPv4 domain and is destined for said user terminal, the step of making compliant of the destination address comprises the following steps:
- searching of an address translation table of the gateway for an entry associating a native destination address with said constructed destination address;
- if an entry has been found, replacement of the constructed destination address of the data packet with the native destination address of the entry.

6. Reception method according to Claim 5, **characterized in that** it furthermore comprises a step of verifying a correspondence between the destination port number of the data packet and the destination port number contained in the constructed destination address.

7. Device for receiving a data packet in an IPv6 domain interconnected to an IPv4 domain, said packet comprising a destination IPv6 address and a source IPv6 address, said device being intended to be implemented in a residential gateway able to connect a user terminal (21, 22) to said IPv6 domain, comprising the following means:
- means for identifying a destination IPv6 address constructed by concatenating an operator prefix, an IPv4 destination address and a destination port number;
- means for, if necessary, making compliant at least one address of the data packet by replacement of said address, said replacement belonging to a group comprising a replacement of a constructed address by a native address of said user terminal (21, 22) and a replacement of a native address of said user terminal (21, 22) by a constructed address, and modification of the data packet with the aid of the address made compliant; and
- means for routing the modified data packet to its destination.

8. Residential gateway able to connect terminals of users of a residential network to an IPv6 domain interconnected to an IPv4 domain, comprising:
- means for obtaining an IPv4 address, a range of port numbers authorized for said gateway and a range of IPv6 addresses authorized for said gateway, said range of IPv6 addresses being constructed by concatenating an operator prefix, said IPv4 address and the range of authorized IPv4 port numbers; and
- a device for receiving an IPv6 data packet in the IPv6 domain interconnected to the IPv4 domain according to Claim 7.

9. Residential gateway according to Claim 8, comprising an address translation table, comprising entries, associating, for a communication session involving a terminal of a user of its residential network, at least one source address, **characterized in that** said gateway is able to record in said entry a constructed source IPv6 address and a native source IPv6 address.

10. Computer program product downloadable from a communication network and/or stored on a medium readable by computer and/or executable by a microprocessor, **characterized in that** it comprises programme code instructions which, when they are executed by a processor, cause this processor to execute the method for receiving a data packet in an IPv6 domain according to Claim 1.

## Patentansprüche

1. Verfahren zum Empfang eines Ipv6-Datenpakets in einer IPv6-Domäne, die mit einer IPv4-Domäne verbunden ist, wobei das Paket eine IPv6-Zieladresse und eine IPv6-Quellenadresse enthält, wobei das Verfahren in einem Residential Gateway durchgeführt wird, das ein Benutzer-Endgerät (21, 22) mit der IPv6-Domäne verbinden kann, das die folgenden Schritte enthält:
- Identifikation einer IPv6-Zieladresse, die durch Verkettung eines Betreiber-Präfix, einer IPv4-Zieladresse und einer Zielportnummer konstruiert wird;
- falls notwendig, Angleichen mindestens einer Adresse des Datenpakets durch Ersetzen der Adresse, wobei das Ersetzen zu einer Gruppe gehört, die ein Ersetzen einer konstruierten Adresse durch eine native Adresse des Benutzer-Endgeräts (21, 22) und ein Ersetzen einer nativen Adresse des Benutzer-Endgeräts (21, 22) durch eine konstruierte Adresse enthält, und Änderung des Datenpakets mit Hilfe der angeglichenen Adresse; und
- Routen des veränderten Datenpakets zu seinem Ziel.

2. Empfangsverfahren nach Anspruch 1, **dadurch gekennzeichnet, dass**, wenn das Datenpaket vom Benutzer-Endgerät kommt und für die IPv4-Domäne bestimmt ist, der Schritt des Angleichens der Quellenadresse außerdem die folgenden Schritte enthält:
- Identifikation einer nativen IPv6-Quellenadresse;
- Erzeugung eines Eintrags in eine Adressenumsetzungstabelle, wobei der Eintrag die native Quellenadresse einer konstruierten Quellenadresse durch Verkettung eines Betreiber-Präfix, einer dem Gateway zugeordneten IPv4-Adresse und einer Quellenportnummer zuordnet, die zu einem Bereich von Portnummern gehört, die für das Gateway autorisiert sind; und
- Ersetzen der nativen Quellenadresse des Datenpakets durch die konstruierte Quellenadresse.

3. Empfangsverfahren nach Anspruch 2, **dadurch gekennzeichnet, dass** die Adressenidentifikation mit Hilfe einer Kennung durchgeführt wird, die in der Zieladresse enthalten ist.

4. Empfangsverfahren nach Anspruch 2, **dadurch gekennzeichnet, dass** es außerdem einen Schritt der Überprüfung einer Entsprechung zwischen der Quellenportnummer des Datenpakets und der Quellenportnummer der konstruierten Quellenadresse enthält.

5. Empfangsverfahren nach Anspruch 1, **dadurch gekennzeichnet, dass**, wenn das Datenpaket von der IPv4-Domäne kommt und für das Benutzer-Endgerät bestimmt ist, der Schritt des Angleichens der Adresse die folgenden Schritte enthält:
- Suche in einer Adressenumsetzungstabelle des Gateways nach einem Eintrag, der der konstruierten Zieladresse eine native Zieladresse zuordnet,
- wenn ein Eintrag gefunden wurde, Ersetzen der konstruierten Zieladresse des Datenpakets durch die native Zieladresse des Eintrags.

6. Empfangsverfahren nach Anspruch 5, **dadurch gekennzeichnet, dass** es außerdem einen Schritt der Überprüfung einer Entsprechung zwischen der Zielportnummer des Datenpakets und der in der konstruierten Zieladresse enthaltenen Zielportnummer enthält.

7. Vorrichtung zum Empfang eines Datenpakets in einer IPv6-Domäne, die mit einer IPv4-Domäne verbunden ist, wobei das Paket eine IPv6-Zieladresse und eine IPv6-Quellenadresse enthält, wobei die Vorrichtung dazu bestimmt ist, in einem Residential Gateway eingesetzt zu werden, das ein Benutzer-Endgerät (21, 22) mit der IPv6-Domäne verbinden kann, die die folgenden Einrichtungen enthält:
- eine Einrichtung zur Identifikation einer IPv6-Zieladresse, die durch Verkettung eines Betreiber-Präfix, einer IPv4-Zieladresse und einer Zielportnummer konstruiert wird;
- eine Einrichtung zum, falls notwendig, Abgleichen mindestens einer Adresse des Datenpakets durch Ersetzen der Adresse, wobei das Ersetzen zu einer Gruppe gehört, die ein Ersetzen einer konstruierten Adresse durch eine native Adresse des Benutzer-Endgeräts (21, 22) und ein Ersetzen einer nativen Adresse des Benutzer-Endgeräts (21, 22) durch eine konstruierte Adresse enthält, und Änderung des Datenpakets mit Hilfe der angeglichenen Adresse; und
- eine Einrichtung zum Routen des veränderten Datenpakets zu seinem Ziel.

8. Residential Gateway, das Benutzerendgeräte eines privaten Netzwerks mit einer IPv6-Domäne verbinden kann, die mit einer IPv4-Domäne verbunden ist, das enthält:
- Einrichtungen zum Erhalt einer IPv4-Adresse, eines Bereichs von Portnummern, die für das Gateway autorisiert sind, und eines Bereichs von IPv6-Adressen, die für das Gateway autorisiert sind, wobei der Bereich von IPv-6-Adressen durch Verkettung eines Betreiber-Präfix, der IPv4-Adresse und des Bereichs von autorisierten IPv4-Portnummern konstruiert wird; und
- eine Empfangsvorrichtung eines IPv6-Datenpakets in der IPv6-Domäne, die mit der IPv4-Domäne verbunden ist, nach Anspruch 7.

9. Residential Gateway nach Anspruch 8, das eine Adressenumsetzungstabelle enthält, die Einträge enthält, die für eine ein Benutzerendgerät seines privaten Netzwerks implizierende Kommunikationssitzung mindestens eine Quellenadresse zuordnen, **dadurch gekennzeichnet, dass** das Gateway in der Lage ist, in dem Eintrag eine konstruierte IPv6-Quellenadresse und eine native IPv6-Quellenadresse zu speichern.

10. Computerprogrammprodukt, das von einem Kommunikationsnetzwerk heruntergeladen und/oder auf einem computerlesbaren Träger gespeichert und/oder von einem Mikroprozessor ausgeführt werden kann, **dadurch gekennzeichnet, dass** es Programmcodeanweisungen enthält, die, wenn sie von einem Prozessor ausgeführt werden, dazu führen, dass dieser Prozessor das Empfangsverfahren eines Datenpakets in einer IPv6-Domäne nach Anspruch 1 ausführt.
